# FASCICULE DE BREVET EUROPEEN

(11) **EP 1 967 429 B1**
(45) Date de publication et mention de la délivrance du brevet: **28.04.2010**
(21) Numéro de dépôt: 08101836.8
(22) Date de dépôt: 21.02.2008
(51) Int. Cl.: B60T 17/22, B60T 13/52

(54) **Servomoteur d'assistance pneumatique au freinage comprenant un clapet anti-retour pour évacuer une surpression interne.**
Pneumatischer Hilfsservomotor zum Bremsen, der ein Rückschlagventil zum Abbau eines Innenüberdrucks umfasst
Pneumatic servomotor for braking assistance including a check valve for evacuating excess internal pressure.

(30) Priorité: 08.03.2007 FR 0701767
(43) Date de publication de la demande: 10.09.2008
(73) Titulaire: ROBERT BOSCH GMBH, 70442 Stuttgart (DE)
(72) Inventeur: Berthomieu, Bruno, 08015 Barcelona (ES); Simon Bacardit, Juan, 08013 Barcelona (ES)
(74) Mandataire: Hurwic, Aleksander Wiktor

(56) Documents cités:
- DE-A1- 2 639 921
- FR-A- 2 864 501
- GB-A- 1 589 120

## Description

La présente invention se rapporte principalement à un servomoteur d'assistance pneumatique au freinage d'un véhicule à moteur, ce servomoteur comprenant un clapet anti-retour pour évacuer une surpression interne.

Un système de freinage d'une automobile comporte généralement un servomoteur d'assistance pneumatique au freinage qui assiste le conducteur lors d'un freinage.

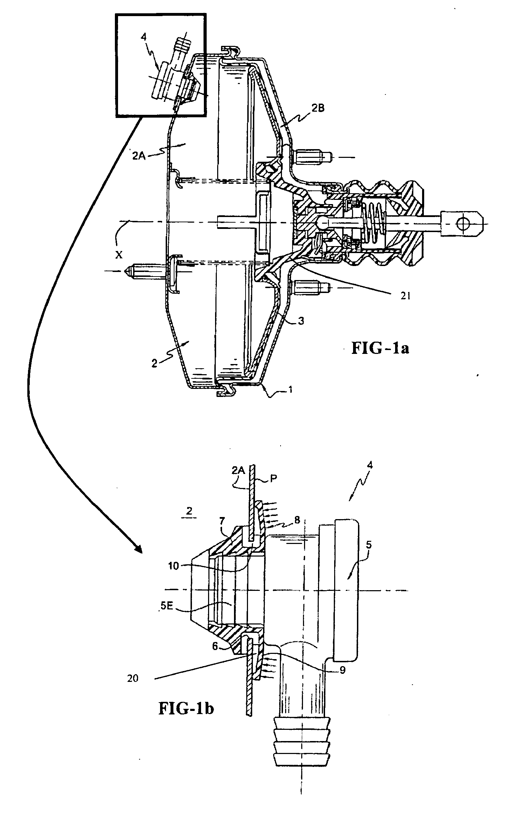

Pour cela, un type de servomoteur connu dans l'état de la technique, comme le servomoteur 1 représenté sur la figure 1a, comprend une enceinte 2 divisée en une chambre avant 2A et une chambre arrière 2B par une jupe 3 fixée sur un piston 21 monté coulissant sur une direction axiale X. La chambre avant 2A est susceptible d'être relié à une source de dépression. La chambre arrière 2B est susceptible soit d'être relié à la chambre avant 2A, soit d'être relié à une source de haute pression (par exemple la pression atmosphérique).

Quand le conducteur de l'automobile déclenche un freinage en appuyant sur la pédale de frein, il ouvre une voie qui met en relation la chambre arrière 2B avec la source de pression atmosphérique et ferme une voie qui met en relation la chambre arrière 2B avec la chambre avant 2A. Alors le différentiel de pression entre la chambre arrière 2B (pression atmosphérique) et la chambre avant (en dépression) exerce une force sur la jupe 3, cette force étant l'assistance qui aide le conducteur dans son freinage.

Les normes actuelles portant sur les systèmes de freinage d'automobiles exigent que ces systèmes proportionnent un niveau de décélération déterminé aux véhicules les incorporant, en cas de défaillance de l'assistance et notamment en cas d'un manque de dépression dans la chambre avant 2A. Or si l'air n'est pas vidé de la chambre avant 2A et si le conducteur freine, l'air présent dans cette chambre avant 2A se comprime au fur et à mesure que la jupe 3 avance et donc exerce une force sur la jupe de sens contraire à la force de freinage, ce qui réduit l'efficacité du freinage.

La demande de brevet ayant pour numéro de publication FR 2 864 501 propose, pour vider l'air en cas de défaillance du circuit de dépression, un servomoteur 1 du type précédemment cité qui comprend en outre des moyens obturables 8 (voir figures 1a et 1b) de mise en communication de la chambre avant 2A avec l'air libre qui comprennent un clapet anti-retour sollicité en position fermée par l'action de la pression atmosphérique.

En cas de défaut dans le circuit de dépression, l'air contenu dans la chambre avant 2A ne reste pas confiné dans cette chambre lorsque le conducteur actionne la pédale de frein. Le déplacement de la jupe 3 comprime l'air contenu dans la chambre avant 2A jusqu'à provoquer l'ouverture du clapet anti-retour 8. L'air est alors chassé de la chambre avant 2A en s'écoulant à travers des orifices de passage du clapet anti-retour.

Mais cette dernière solution présente un problème concernant la position de ce clapet anti-retour. En effet, le clapet anti-retour 8 est soumis aux poussières qui peuvent exister dans le moteur. A cause de ces poussières qui peuvent se bloquer notamment dans l'espace 20 de façon à empêcher la fermeture du clapet 8, ce clapet 8 peut donc, rester ouvert et donc provoquer une fuite permanente de la dépression de la chambre avant, diminuant l'assistance du servomoteur.

C'est par conséquent un but de la présente invention de proposer un servomoteur comprenant un clapet anti-retour pour laisser échapper l'air qui soit compris dans la chambre avant, notamment en cas de défaillance du circuit de dépression, tout en maintenant l'étanchéité de cette chambre avant lors du fonctionnement normal du servomoteur et en empêchant les poussières pouvant se trouver dans le compartiment moteur d'influencer son fonctionnement.

La présente invention a principalement pour objet un servomoteur d'assistance pneumatique au freinage ayant un axe, comprenant une enceinte divisée en une chambre avant et une chambre arrière par une jupe fixée sur un piston monté coulissant sur une direction axiale, le servomoteur comprenant un clapet anti-retour pour assurer l'évacuation d'air de la chambre avant quand la pression y régnant dépasse une certaine valeur de référence, caractérisé en ce que ce clapet anti-retour est interne au servomoteur.

La valeur de référence peut être la pression atmosphérique.

Comme la chambre avant est généralement susceptible d'être relié à une source de dépression, si cette source ne réalise plus sa fonction correctement, la pression dans la chambre avant augmentant, et le conducteur devant freiner sans assistance, l'air compris dans cette chambre avant peut s'échapper par le clapet anti-retour. Conformément à cette invention, ce clapet anti-retour est interne, c'est-à-dire qu'il n'est susceptible d'être en contact qu'avec de l'air qui soit à l'intérieur de l'enceinte ou du piston du servomoteur. Ceci protège le clapet anti-retour des poussières régnant dans le compartiment moteur.

Grâce à cette invention, les poussières régnant dans le compartiment moteur ne peuvent altérer le fonctionnement normal du clapet anti-retour, en mettant en cause son étanchéité quand cette étanchéité est requise.

Selon l'état de la technique FR 2 864 501, afin de laisser échapper l'air qui est compris dans la chambre avant en cas de défaillance du circuit de dépression tout en maintenant l'étanchéité de cette chambre avant lors du fonctionnement normal du servomoteur, il est proposé des moyens obturables comprenant un clapet anti-retour, dont la fonctionnalité est de mettre en communication la chambre avant avec l'air libre : le clapet de l'art antérieur est à l'extérieur du servomoteur, c'est-à-dire à l'extérieur de l'enceinte et/ou du piston. Donc pour un homme du métier, le fait d' introduire le clapet à l'intérieur d'un servomoteur ne découle pas d'une manière évidente de cet état de la technique car, un servomoteur étant un dispositif fabriqué en grande série et amélioré de façon continue de façon à réduire son coût, sa masse et son encombrement, il est toujours très difficile de faire une quelconque modification dans son intérieur tout en maintenant les fortes exigences de coût, masse et encombrement propres à tout dispositif internes aux automobiles.

Dans une réalisation, la chambre arrière étant adaptée pour être reliée soit à la chambre avant au travers d'une voie traversant le piston, ou soit à une partie interne du piston ayant comme pression la valeur de référence, le clapet anti-retour est monté dans le piston de telle sorte que la partie mobile du clapet anti-retour soit entre de l'air provenant de cette voie et de l'air provenant de la partie interne du piston ayant comme pression la valeur de référence.

En effet, par définition un clapet a une partie mobile. Comme normalement l'air provenant de la voie a une pression basse due au fonctionnement d'une source de dépression dépressurisant la chambre avant, cette partie mobile subit lors du fonctionnement normal une force de pression s'appliquant sur sa partie étant au contact de l'air provenant de la partie interne du piston ayant comme pression la valeur de référence. Si la pression de la chambre avant dépasse la valeur de référence notamment à cause de la défaillance de la source de dépression, la partie mobile du clapet subit alors une force s'appliquant du côté opposé, c'est-à-dire du côté étant en contact avec de l'air provenant de cette voie, et donc de la chambre avant.

Selon une réalisation de l'invention, le piston comprend au moins un filtre pour filtrer l'air qui rentre dans la partie interne du piston ayant comme pression la valeur de référence.

Grâce à cette réalisation, l'air qui rentre en contact avec le clapet anti-retour est filtré et donc le clapet anti-retour est encore plus protégé de l'air ambiant pollué présent dans le compartiment moteur.

Dans une réalisation, le clapet anti-retour comprend une coupelle directionnelle comprenant une lèvre s'étendant vers l'extérieur de la coupelle radialement, la lèvre étant adaptée pour
- bloquer le passage de l'air de la partie interne du piston ayant comme pression la valeur de référence à la voie reliant la chambre arrière et la chambre avant, quand la pression dans cette voie est inférieure à la valeur de référence,
- laisser passer l'air de la voie reliant la chambre arrière et la chambre avant vers la partie interne du piston ayant comme pression la valeur de référence, quand la pression dans cette voie est supérieure à la valeur de référence.

Cette lèvre peut être annulaire ou partialement annulaire.

Selon une réalisation, la coupelle est montée sur une rainure radiale d'une cage portant un clapet de valve à trois voies qui est susceptible d'ouvrir et de fermer la voie reliant la chambre arrière et la chambre avant et de mettre en relation la chambre arrière avec une source de pression à la valeur de référence, cette cage étant adapté au moyen d'au moins une fenêtre pour laissé passer l'air présent dans la partie interne du piston ayant comme pression la valeur de référence jusqu'à la lèvre de la coupelle.

Grâce à cette réalisation, la coupelle peut remplacer un joint torique statique qui est présent généralement dans les servomoteurs de l'art antérieur pour isoler l'ensemble valve car la coupelle peut réaliser aussi cette fonction.

La présente invention sera mieux comprise à l'aide de la description qui va suivre et des figures fournies en annexes sur lesquelles l'avant et l'arrière correspondent respectivement à la gauche et à la droite des dessins et pour lesquelles :
- la figure 1a est une vue en coupe axiale d'un servomoteur de l'état de la technique antérieure,
- la figure 1b est une vue en coupe longitudinale d'un détail de la vue 1a représentant des moyens obturables reliant l'intérieur d'une chambre avant avec l'air libre,
- la figure 1c est une vue en coupe axiale à 90° d'une partie d'un servomoteur de l'état de la technique antérieure comprenant notamment le piston de ce servomoteur,
- la figure 2a est une vue en coupe axiale à 90° d'une partie d'un servomoteur conforme à une réalisation de l'invention comprenant notamment le piston de ce servomoteur,
- les figures 2b et 2c représentent schématiquement deux modes de fonctionnement d'une réalisation de l'invention selon la pression régnant dans la chambre avant d'un servomoteur conforme à une réalisation de l'invention.

Les mêmes références seront utilisées pour décrire les éléments ayant les mêmes fonctions sur les différentes figures concernant l'invention.

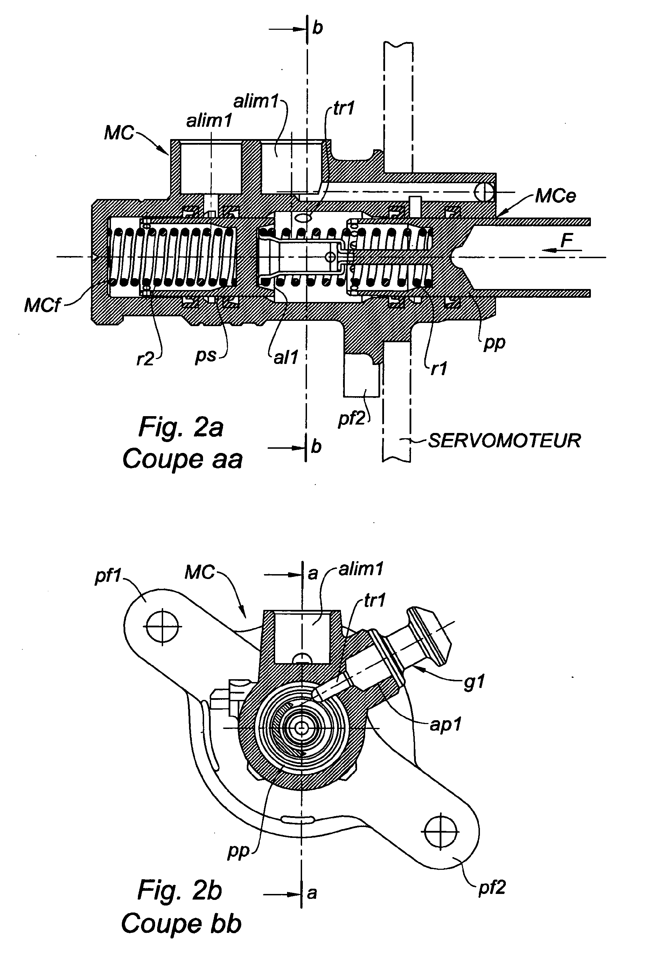

La figure 1c montre une vue schématique en coupe axiale à 90° d'une partie d'un servomoteur 100 de l'état de la technique antérieure et notamment de son piston 104 et la figure 2a montre une vue schématique en coupe axiale à 90° d'une partie d'un servomoteur 201 conforme à une réalisation de l'invention comprenant notamment le piston 205 de ce servomoteur. Ainsi, il est aisé de voir les différences entre l'état de la technique antérieure et cette réalisation de l'invention.

Le servomoteur de la figure 1c fonctionne d'une façon connue pour l'homme du métier, sa description sera donc succincte : un conducteur, en appuyant sur la pédale de frein non représenté, fait avancer une tige de commande 102, qui fait avancer à son tour un distributeur plongeur 106.

Il existe dans le servomoteur une valve à trois voies, pouvant être du type ZLT ('zéro lost travel' en terminologie anglaise) comportant un clapet susceptible de coopérer avec :
- un premier siège de clapet d'équilibrage porté par une extrémité longitudinale arrière d'une extension du piston 104 et
- un deuxième siège de clapet d'admission porté par un épanouissement tronconique de l'extrémité arrière du distributeur plongeur 106.

Le clapet de la valve à trois voies est formé par une surface annulaire contenue dans le plan orthogonale à l'axe X porté par une extrémité longitudinale avant d'un manchon 118 en matériau souple monté immobile dans le piston 104 par l'intermédiaire d'une cage 120 montée par exemple à force dans la piston 104.

Quand le distributeur plongeur 106 avance, le clapet :
- vient au contact du siège d'équilibrage pour interrompre la communication entre la chambre avant 110 et la chambre arrière 108 et
- s'éloigne du siège d'admission, permettant ainsi à l'air à pression élevée (en général la pression atmosphérique) de pénétrer dans la chambre arrière 108.

Il se crée alors un différentiel de pression entre la chambre avant 110 et la chambre arrière 108, qui génère une force d'assistance s'appliquant sur la jupe 109.

L'air rentre dans le piston 104 au travers d'un filtre annulaire 124 situé à l'arrière de ce piston 104.

Dans le servomoteur 100 de la figure 1c, le piston 104 comprend un joint torique 122 participant à l'isolation de l'ensemble valve de la pression régnant à l'extérieur du servomoteur 100.

Une partie d'un servomoteur 201 comprenant le piston 205 et conforme à une réalisation de l'invention est représenté dans la figure 2a.

Dans cette réalisation, afin de positionner un clapet anti-retour dans le piston 205, une coupelle 225 conforme à une réalisation de l'invention est disposée dans une rainure annulaire d'une cage 221 conforme à une réalisation de l'invention. Cette cage 221 porte un manchon 218 comme le fait aussi la cage 120 de l'état de la technique antérieure.

Cette coupelle 225 directionnelle comprend une lèvre 227 s'étendant radialement vers l'extérieur de la coupelle 225.

Cette cage 221 peut être réalisée par exemple en plastique technique. La coupelle peut être réalisée para exemple en caoutchouc.

La cage 221 comprend dans cette réalisation au moins une fenêtre 223 qui permet à l'air extérieur de traverser la cage 221, une fois filtré par un filtre 224, afin de venir au contact de la coupelle 225 et donc de sa lèvre 227. Un côté de la lèvre 227 est donc de façon permanente au contact d'air à la pression atmosphérique mais filtré.

Cet air est donc beaucoup plus pur que celui régnant dans le compartiment moteur parce que premièrement, la coupelle 225 est protégée à l'intérieur du piston 205, et deuxièmement parce que l'air traverse le filtre 224.

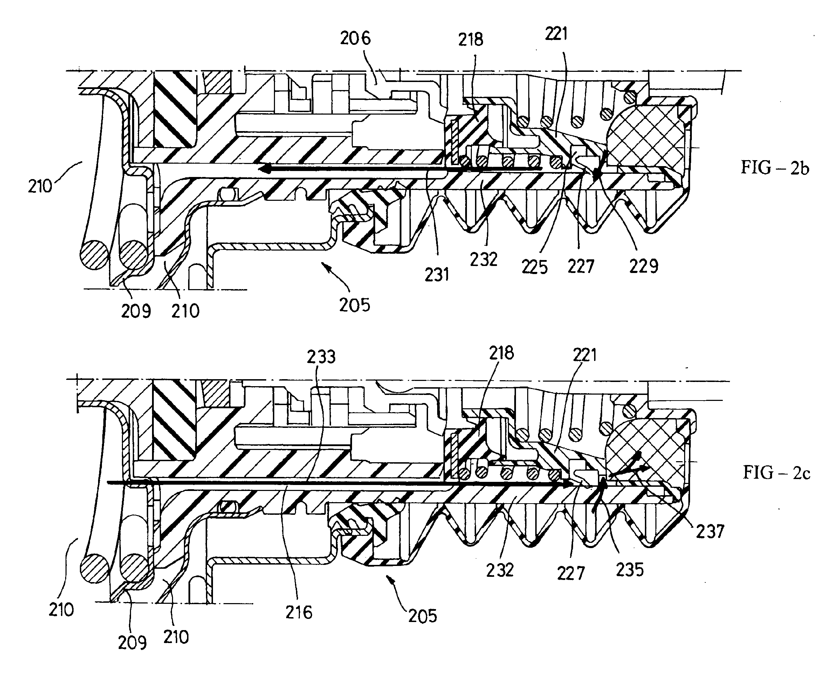

Grâce aux figures 2b et 2c, le fonctionnement du servomoteur 201 est détaillé. Ces deux figures représentent un détail de la partie de la figure 2a qui est en dessous de l'axe X. La figure 2b représente schématiquement le fonctionnement de cette réalisation de l'invention lorsqu'il existe une dépression dans la chambre avant 210. Alors, indépendamment du fonctionnement de la valve à trois voies, cette dépression existe dans la voie 216 reliant la chambre avant 210 avec l'ensemble valve à trois voies.

La dépression est communiquée sous le manchon 218 pour arriver sous la cage 221 jusqu'à la face avant de la lèvre 227. Comme cette lèvre 227 fait frontière entre deux volumes ayant des pressions différentes, elle subit une force 229, résultat de cette pression différentielle, qui tend à la plaquer ou à l'écraser contre l'armature extérieure 232 du piston 205. Grâce à cette pression différentielle, la lèvre assure l'étanchéité de la voie 216 vis-à-vis de la partie du piston étant à la pression atmosphérique.

Si suite à un freinage, quand le conducteur relâche la pédale de frein, de l'air doit circuler dans la voie 216 pour vider la chambre arrière 208, cette circulation se fera de la valve à trois voies vers la chambre avant suivant la flèche 231.

La figure 2c montre schématiquement ce qu'il arrive dans cette réalisation de l'invention en cas de défaillance de la dépression de la chambre avant 210. Dans ce cas là, à cause de cette défaillance, la pression de la chambre avant 210 augmente, mais de plus lorsque la pédale de frein est actionnée, le déplacement de la jupe 209 fait encore augmenter la pression dans la chambre avant 210. Cette pression s'oppose au déplacement de cette jupe 209 et donc à l'actionnement de la pédale. Dans ce cas :
- cette surpression de la chambre avant 210 est transmise par la voie 216 au bord avant de la lèvre 227, l'air circulant alors selon la flèche 233 et
- la lèvre 227 extérieure de la coupelle 225 subit une force 235 et se déforme, l'air s'écoulant alors selon les flèches 237 au travers du filtre 224 en dehors du piston 201 ; on évite ainsi l'augmentation de la pression dans la chambre avant 210 et on obtient un rendement optimum en cas de défaut d'assistance.

On peut voir que dans cette réalisation, le joint torique 122 utilisé dans le servomoteur 100 de l'état de la technique antérieure n'est plus, avantageusement, nécessaire car sa fonction est réalisée par la coupelle 225. Cette solution pour améliorer le rendement du servomoteur notamment lors d'une défaillance de la dépression de la chambre avant permet donc d'éviter un élément et donc de réduire le surcoût d'un servomoteur conforme à cette réalisation de l'invention. Cette réalisation permet d'obtenir un servomoteur ayant un coût acceptable, sans augmenter sa masse et en diminuant son encombrant (pas de partie saillante sur la coque recouvrant la chambre avant) par rapport au servomoteur décrit dans le document FR 2 864 501, tout en résolvant le problème posé.

Le fonctionnement d'un servomoteur conformément à cette invention demeure ainsi sûr, même notamment en cas de défaillance dans le circuit de dépression. De plus, grâce à cette invention, le clapet anti-retour étant dans le servomoteur (comme la coupelle dans la réalisation décrite précédemment), le dit clapet est protégé des poussières régnant dans le compartiment moteur.

Cette invention peut être sujette à de multiples variantes. Notamment, le fluide mis en oeuvre dans le servomoteur peut être autre que l'air et/ou la pression haute de référence peut être une autre pression que la pression atmosphérique (par exemple dans le cadre de l'utilisation d'air comprimé).

La présente invention s'applique principalement à l'industrie du freinage pour véhicule automobile.

## Revendications

1. Servomoteur d'assistance pneumatique au freinage (201) ayant un axe (X), comprenant une enceinte divisée en une chambre avant (210) et une chambre arrière (208) par une jupe (209) fixée sur un piston (205) monté coulissant sur la direction axiale (X), le servomoteur comprenant un clapet anti-retour (225) pour assurer l'évacuation d'air de la chambre avant quand la pression y régnant dépasse une certaine valeur de référence, **caractérisé en ce que** ce clapet anti-retour (225) est interne au servomoteur (201) et que la chambre arrière (208) étant adaptée pour être reliée soit à la chambre avant (210) au travers d'une voie (216) traversant le piston (205), ou soit à une partie interne du piston ayant comme pression la valeur de référence, le clapet anti-retour (225) est monté dans le piston (205) de telle sorte que la partie mobile (227) du clapet anti-retour (225) soit entre de l'air provenant de cette voie (216) et de l'air provenant de la partie interne du piston ayant comme pression la valeur de référence.

2. Servomoteur d'assistance au freinage (201) selon la revendication 1, **caractérisé en ce que** le piston (205) comprend au moins un filtre (224) pour filtrer l'air qui rentre dans la partie interne du piston (205) ayant comme pression la valeur de référence.

3. Servomoteur d'assistance au freinage (201) selon la revendication 1 ou 2, **caractérisé en ce que** le clapet anti-retour comprend une coupelle (225) directionnelle comprenant une lèvre (227) s'étendant vers l'extérieur de la coupelle radialement, la lèvre (227) étant adaptée pour :
- bloquer le passage de l'air de la partie interne du piston ayant comme pression la valeur de référence à la voie (216) reliant la chambre arrière (208) et la chambre avant (210), quand la pression dans cette voie (216) est inférieure à la valeur de référence,
- laisser passer l'air de la voie (216) reliant la chambre arrière (208) et la chambre avant (210) vers la partie interne du piston ayant comme pression la valeur de référence, quand la pression dans cette voie (216) est supérieure à la valeur de référence.

4. Servomoteur d'assistance au freinage (201) selon la revendication 3, **caractérisé en ce que** la coupelle (225) est montée sur une rainure radiale d'une cage (221) portant un clapet de valve à trois voies qui est susceptible d'ouvrir et de fermer la voie (216) reliant la chambre arrière (208) et la chambre avant (210) et de mettre en relation la chambre arrière (208) avec une source de pression à la valeur de référence, cette cage (221) étant adapté au moyen d'au moins une fenêtre (223) pour laisser passer l'air présent dans la partie interne du piston ayant comme pression la valeur de référence jusqu'à la lèvre (227) de la coupelle (225).

## Claims

1. Pneumatic brake booster (201) having an axis (X), comprising an enclosure divided into a front chamber (210) and a rear chamber (208) by a skirt (209) fastened to a piston (205) mounted so that it can slide in the axial direction (X), the booster comprising a nonreturn valve (225) to evacuate air from the front chamber when the pressure prevailing exceeds a certain reference value, **characterized in that** this nonreturn valve (225) is internal to the booster (201) and **in that**, with the rear chamber (208) being designed to be connected either to the front chamber (210) via a channel (216) passing through the piston (205) or to an internal part of the piston having the reference value as pressure, the nonreturn valve (225) is mounted in the piston (205) such that the moving part (227) of the nonreturn valve (225) is between air coming from this channel (216) and air coming from the internal part of the piston having the reference value as pressure.

2. Brake booster (201) according to claim 1, **characterized in that** the piston (205) comprises at least one filter (224) for filtering the air which enters the internal part of the piston (205) having the reference value as pressure.

3. Brake booster (201) according to claim 1 or 2,
**characterized in that** the nonreturn valve comprises a directional cup (225) comprising a lip (227) which extends radially toward the outside of the cup, the lip (227) being designed to:
- block the passage of the air from the internal part of the piston having the reference value as pressure to the channel (216) connecting the rear chamber (208) and the front chamber (210), when the pressure in this channel (216) is below the reference value,
- allow the air from the channel (216) connecting the rear chamber (208) and the front chamber (210) to pass toward the internal part of the piston having the reference value as pressure, when the pressure in this channel (216) is above the reference value.

4. Brake booster (201) according to claim 3, **characterized in that** the cup (225) is mounted in a radial groove of a cage (221) bearing a three-way valve shutter which is able to open and to close the channel (216) connecting the rear chamber (208) and the front chamber (210) and to connect rear chamber (208) with a source of pressure at the reference value, this cage (221) being adapted by means of at least one aperture (223) to allow the air present in the internal part of the piston having the reference value as pressure to pass as far as the lip (227) of the cup (225).

## Patentansprüche

1. Pneumatischer Servomotor zur Bremsunterstützung (201) mit einer Achse (X), der einen Raum aufweist, der durch eine Schürze (209), die an einem in axialer Richtung (X) gleitend angebrachten Kolben (205) befestigt ist, in eine vordere Kammer (210) und eine hintere Kammer (208) unterteilt ist, wobei der Servomotor ein Rückschlagventil (225) aufweist, um das Abführen von Luft aus der vorderen Kammer zu gewährleisten, wenn der dort herrschende Druck einen bestimmten Bezugswert überschreitet, **dadurch gekennzeichnet, dass** dieses Rückschlagventil (225) in dem Servomotor (201) integriert ist und die hintere Kammer (208) dazu geeignet ist, entweder über einen durch den Kolben (205) verlaufenden Durchgang (216) mit der vorderen Kammer (210) oder mit einem Innenabschnitt des Kolbens verbunden zu sein, dessen Druck dem Bezugswert entspricht, wobei das Rückschlagventil (225) so in dem Kolben (205) angebracht ist, dass der bewegliche Teil (227) des Rückschlagventils (225) zwischen der Luft aus diesem Durchgang (216) und der Luft aus dem Innenabschnitt des Kolbens liegt, dessen Druck dem Bezugswert entspricht.

2. Servomotor zur Bremsunterstützung (201) nach Anspruch 1, **dadurch gekennzeichnet, dass** der Kolben (205) mindestens einen Filter (224) aufweist, um die in den Innabschnitt des Kolbens (205), dessen Druck dem Bezugswert entspricht, dringende Luft zu filtern.

3. Servomotor zur Bremsunterstützung (201) nach Anspruch 1 oder 2, **dadurch gekennzeichnet, dass** das Rückschlagventil eine Schale (225) mit Richtwirkung aufweist, die eine Lippe (227) aufweist, die sich radial zum Äußeren der Schale erstreckt, wobei die Lippe (227) dazu geeignet ist:
- den Durchlass der Luft von dem Innenabschnitt des Kolbens, dessen Druck dem Bezugswert entspricht, zu dem die hintere Kammer (208) und die vordere Kammer (210) verbindenden Durchgang (216) zu blockieren, wenn der Druck in diesem Durchgang (216) unter dem Bezugswert liegt,
- den Durchlass von Luft von dem die hintere Kammer (208) und die vordere Kammer (210) verbindenden Durchgang (216) zum Innenabschnitt des Kolbens, dessen Wert dem Bezugswert entspricht, zu gestatten, wenn der Druck in diesem Durchgang (216) über dem Bezugswert liegt.

4. Servomotor zur Bremsunterstützung (201) nach Anspruch 3, **dadurch gekennzeichnet, dass** die Schale (225) an einer radialen Einkerbung eines Halters (221) angebracht ist, der ein Dreiwegeventilelement trägt, das den die hintere Kammer (208) und die vordere Kammer (210) verbindenden Durchgang (216) öffnen und schließen und die hintere Kammer (208) mit einer Quelle für Druck mit dem Bezugswert verbinden kann, wobei dieser Halter (221) so ausgeführt ist, dass er über mindestens ein Fenster (223) den Durchlass der Luft, die in dem Innenabschnitt des Kolbens, dessen Druck dem Bezugswert entspricht, vorhanden ist, zur Lippe (227) der Schale (225) gestattet.
